# EUROPEAN PATENT SPECIFICATION

(11) **EP 3 431 376 B1**
(45) Date of publication and mention of the grant of the patent: **07.07.2021**
(21) Application number: 17766372.1
(22) Date of filing: 01.03.2017
(51) Int. Cl.: B62K 25/06, B62J 99/00, F16F 9/19, F16F 9/50, B62J 27/00, B60G 17/016, B60G 17/08

(54) **DAMPER CONTROL DEVICE, AND SUSPENSION DEVICE**
DÄMPFERSTEUERUNGSVORRICHTUNG UND AUFHÄNGUNGSVORRICHTUNG
DISPOSITIF DE COMMANDE D'AMORTISSEUR ET DISPOSITIF DE SUSPENSION

(30) Priority: 17.03.2016 JP 2016053223
(43) Date of publication of application: 23.01.2019
(73) Proprietor: KYB Corporation, Tokyo 105-6111 (JP)
(72) Inventor: AWANO, Koichiro, Tokyo 105-6111 (JP)
(74) Representative: MFG Patentanwälte Meyer-Wildhagen Meggle-Freund Gerhard PartG mbB
(86) International application number: PCT/JP2017/008158
(87) International publication number: WO 2017/159369

(56) References cited:
- EP-A1- 2 551 158
- JP-A- H01 172 093
- JP-A- H01 172 093
- JP-A- H05 238 235
- JP-A- S60 255 589
- JP-A- S60 255 589
- JP-A- 2014 190 403
- JP-A- 2014 190 403
- US-A1- 2002 133 277

## Description

### Technical Field

The present invention relates to improvement of a damper control device, and a suspension device.

### Background Art

In a straddle-type vehicle such as a two-wheeled vehicle, a body is banked in a lateral direction so that centrifugal force and the gravity acting on the straddle-type vehicle are balanced during turning, that is, the body is tilted toward a turning center with respect to a road surface to perform turning.

When centrifugal force exceeding a grip of a tire of the straddle-type vehicle acts due to excessive turning speed or the like during the turning of the straddle-type vehicle, front and rear wheels skid in a lateral direction with respect to the road surface.

From this state, when the grip of the tires of the front and rear wheels is recovered due to a decrease in the turning speed or the like and the skidding of the front and rear wheels is eliminated, a behavior, so-called highside, occurs, in which a body rotates to the side opposite from the turning center, around a ground point to the road surface of the front and rear wheels.

This highside is a phenomenon generated when, due to rapid recovery of the grip, the frictional force between the front and rear wheels and the road surface pushes the straddle-type vehicle toward the turning center, while the inertial force acting on the straddle-type vehicle pushes the straddle-type vehicle toward the counter-turning center, so that the frictional force and inertial force act as a couple of force to rotate the straddle-type vehicle toward the counter-turning center.

In the highside, a rider becomes uncontrollable of the straddle-type vehicle, and in some cases the rider is thrown out from the vehicle, as well as overturned, the highside is a very dangerous behavior. However, a curve entry speed and a bank angle are appropriate, such highside can be prevented. Therefore, as disclosed in JP 2002-140800 A, a device has been developed, that detects the speed of the straddle-type vehicle and the bank angle and warns a rider when there is a danger of overturning.

### The Japanese patent application publication

JP S60 255589 A, which is considered to represent the closest prior art, discloses a damping force adjusting device in a rear wheel suspension system for a motorcycle.

The Japanese patent application publication JP H01 172093 A discloses a damping force adjusting device for a shock absorber in a motorcycle.

### Summary of the Invention

In such a conventional device that issues a warning, a warning is issued so that the occurrence of highside can be prevented beforehand. However, when a vehicle enters a curve at a speed with which the highside occurs despite the warning, the occurrence of the highside cannot be prevented anymore.

Thus, the present invention has been invented for improving the above problem, and an object of the present invention is to provide a damper control device for a damper and a suspension device capable of preventing highside from occurring.

In order to achieve the above object, the damper control device and the suspension device of the present invention control the damping force of the damper based on a bank angle. The degree of the bank angle is a measure of the easiness of occurrence of the highside and the damping force of the damper is controlled based on the bank angle in the damper control device and the suspension device. Thus, the damping force of the damper can be appropriately controlled in accordance with a situation in which the highside is easy to occur.

According to a first aspect, the present invention provides a damper control device in accordance with independent claim 1. According to a second aspect, the present invention provides a suspension device in accordance with independent claim 3. Further aspects of the present invention are set forth in the dependent claims, the drawings and the following description.

### Brief Description of Drawings

Fig. 1 is a system configuration diagram of a suspension device according to an embodiment.
Fig. 2 is a schematic diagram of a damper.
Fig. 3 is a control block diagram of a damper control device according to an embodiment.
Fig. 4 is a diagram for explaining a relationship between acceleration in a vertical direction and a lateral direction of a body, and a bank angle.
Fig. 5 is a diagram for explaining a relationship between angular velocities in a pitch direction and a yaw direction of the body and a bank angle.
Fig. 6 is a diagram illustrating a dead band area of a bank angle obtained by a second bank angle calculation unit.
Fig. 7 is a flowchart illustrating an example of a calculation processing procedure of a damping force command value in the damper control device of an embodiment.

### Description of Embodiments

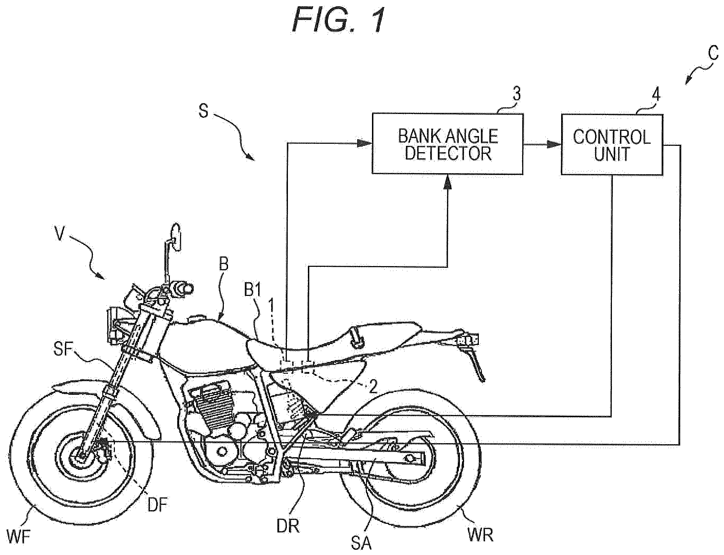

The present invention will be described below based on the embodiment illustrated in the drawings. As illustrated in Figs. 1 to 3, a suspension device S according to an embodiment is configured to include a front wheel side damper DF interposed between a body B and a front wheel WF of a vehicle V that is a straddle-type vehicle, a rear wheel side damper DR that is a rear wheel side damper interposed between the body B and a rear wheel WR, and a damper control device C.

Each part will be described in detail, and the vehicle V is assumed to be a motorcycle that is the straddle-type vehicle in this example. The front wheel side damper DF is built in a front fork SF interposed between the body B and the front wheel WF being a wheel, together with a front wheel side suspension spring not illustrated, so as to exert damping force at the time of extension and contraction. The rear wheel side damper DR is interposed between the body B and a swing arm SA that rotatably holds the rear wheel WR being a wheel, together with a rear wheel side suspension spring not illustrated, and exerts damping force at the time of extension and contraction.

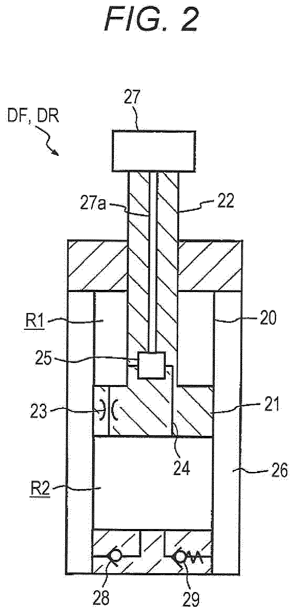

In this example, as illustrated in Fig. 2, both the front wheel side damper DF and the rear wheel side damper DR, are configured to include: a cylinder 20; a piston 21 that is slidably inserted into the cylinder 20 and partitions the cylinder 20 into an extension side chamber R1 and a compression side chamber R2; a piston rod 22 that is movably inserted to the cylinder 20, and is connected to the piston 21; a damping valve 23 that is provided in the piston 21, and makes the extension side chamber R1 and the compression side chamber R2 communicate with each other; a bypass passage 24 that makes the extension side chamber R1 and the compression side chamber R2 communicate with each other by bypassing the damping valve 23; a damping force adjustment valve 25 provided in the middle of the bypass passage 24; a reservoir 26 that supplies and discharges hydraulic fluid that is excessive or insufficient in the cylinder 20 by the piston rod 22 that enters and exits the cylinder 20; a suction passage 28 that allows only a flow of the hydraulic fluid from the reservoir 26 to the compression side chamber R2; and a pressure side valve 29 that applies resistance to the flow of the hydraulic fluid from the compression side chamber R2 to the reservoir 26.

Although not illustrated in detail, in the present example, the damping force adjustment valve 25 includes: an extension side hard position in which large resistance is applied to the flow of the hydraulic oil from the extension side chamber R1 to the compression side chamber R2 and a small resistance is applied to the flow to the opposite side; and a medium position in which the same degree of resistance is applied to both the flow of hydraulic oil from the extension side chamber R1 to the compression side chamber R2 and the flow of the hydraulic oil from the compression side chamber R2 to the extension side chamber R1. In this example, the damping force adjustment valve 25 is connected to an actuator 27 via a control rod 27a, and is driven by the actuator 27 so as to be switchable to each position. As the damping force adjustment valve 25, for example, a rotary valve disclosed in JP 05-238235 A, or the like may be used, but the damping force adjustment valve 25 is not limited to this rotary valve.

In these dampers DF, DR, there are two flows as hydraulic oil flows, that is, a flow of hydraulic oil passing through the damping valve 23 and a flow of hydraulic oil passing the damping force adjustment valve 25 and passing through the bypass passage 24.

When the damping force adjustment valve 25 adopts the extension side hard position, if both the dampers DF, DR extend, large resistance is applied to the flow of the hydraulic oil passing through the bypass passage 24, so that both dampers DF, DR show damping characteristics with a large damping coefficient. On the contrary, when the damping force adjustment valve 25 adopts the extension side hard position, if both the dampers DF, DR contract, only small resistance is applied to the flow of the hydraulic oil passing through the bypass passage 24, so that both dampers DF, DR show damping characteristics with a small damping coefficient. Therefore, when the damping force adjustment valve 25 adopts the extension side hard position, the damper DF on the front wheel side and the damper DR on the rear wheel side are in the extension side hard mode in which the damping coefficient on the extension side is increased, and the damping coefficient on the contraction side is decreased. The damping force adjustment valve 25 can adjust the valve opening degree by adjusting the position of the actuator 27 in the extension side hard mode, so that the magnitude of the extension side damping force can be adjusted while minimizing the compression side damping force .

When the damping force adjustment valve 25 adopts the medium position, even if both the dampers DF, DR extend or contract, medium resistance is applied to the flow of the hydraulic oil passing through the bypass passage 24, so that both dampers DF, DR show damping characteristics with a medium damping coefficient. Therefore, when the damping force adjustment valve 25 adopts the medium position, the damper DF on the front wheel side and the damper DR on the rear wheel side are in the medium mode in which the damping coefficients on both extension and contraction sides are medium.

The damping force adjustment valve 25 may be a solenoid valve of which the resistance applied to the flow of the passing hydraulic oil can be changed by adjusting the opening degree. In this case, the damping force adjustment valve 25 may apply resistance to both flow of the hydraulic fluid from the extension side chamber R1 to the compression side chamber R2 and flow of the hydraulic fluid from the compression side chamber R2 to the extension side chamber R1. In this case, both the damping force (extension side damping force) during an extension stroke and the damping force (compression side damping force) during a contraction stroke of the dampers DF, DR can be adjusted by adjusting the opening degree of the damping force adjustment valve 25. The damping force adjustment valve 25 may be an electromagnetic relief valve capable of adjusting the valve opening pressure, and any electromagnetic relief valve may be utilized as the damping force adjustment valve 25 as long as at least the valve can adjust the damping force of the extension side exerted by the dampers DF, DR.

The faster the speed of turning of the vehicle V becomes, the greater the centrifugal force acting on the vehicle V becomes. Therefore, it is necessary to increase the bank angle of when banking of the body B is performed toward the turning center. In other words, when the bank angle of the body B increases, the speed of the vehicle V increases and the centrifugal force acting on the vehicle V also increases. As the centrifugal force increases, the grip of the tires of the front and rear wheels WF, WR is lower than the centrifugal force, and a state is established where skidding and the highside is easy to occur. Here, as a result of earnest studies on the process of occurrence of the highside, the inventor has found that one of the causes of the highside is that, after the ground loads of the front and rear wheels WF, WR are released by the skidding of the front and rear wheels WF, WR, at the time of the grip recovery, the load exerted by the suspension abruptly changes when the ground load suddenly returns to the original state. In addition, the inventor has found that if the extension side damping force of the dampers DF, DR is increased to suppress the extension of the dampers DF, DR in a situation where the highside occurs, the reduction of the load of the suspension can be suppressed even at the skidding. The highside is easier to occur as the bank angle increases, as described above.

Therefore, the damper control device C and the suspension device S of the present invention are configured to control the extension side damping force of the dampers DF, DR based on the bank angle so that the highside is prevented from occurring.

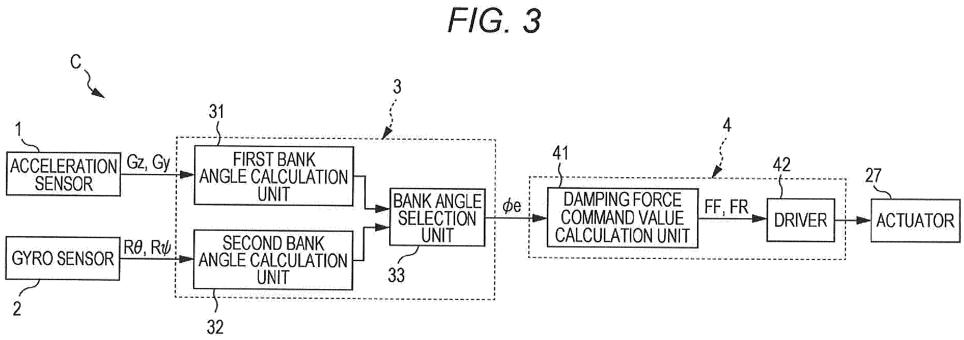

Specifically, as illustrated in Figs. 1 and 3, the control device C is configured to include: an acceleration sensor 1 that detects acceleration Gz, Gy of the vertical direction and the lateral direction of the body B of the vehicle V; a gyro sensor 2 that detects angular velocities Rθ, Rψ in the pitch direction and the yaw direction of the body B; a bank angle detector 3 that obtains a bank angle ϕe that is an inclination angle of the body B; and a control unit 4 that obtains the damping force command value of the dampers DF, DR based on the bank angle ϕe to drive the actuator 27, and control the damping force exerted by the dampers DF, DR.

As illustrated in Fig. 1, the acceleration sensor 1 is provided directly below a seat B1 on which a rider is seated, the seat B1 provided in the body B of the vehicle V. The acceleration sensor 1 detects the acceleration Gz, Gy in the vertical direction and the lateral direction of the body B. The acceleration sensor 1 of this example may be a triaxial acceleration sensor that detects not only the acceleration Gz, Gy in the vertical direction and the lateral direction of the body B, but also the acceleration of the longitudinal direction of the body B.

As illustrated in Fig. 1, as similar to the acceleration sensor 1, the gyro sensor 2 is provided directly below the seat B1 in the body B, and detects the angular velocities Rθ, Rψ in the pitch direction and the yaw direction of the body B. The gyro sensor 2 of this example may be a triaxial gyro sensor that detects not only the angular velocities Rθ, Rψ in the pitch direction and the yaw direction of the body B, but also the angular velocity of the bank direction of the body B.

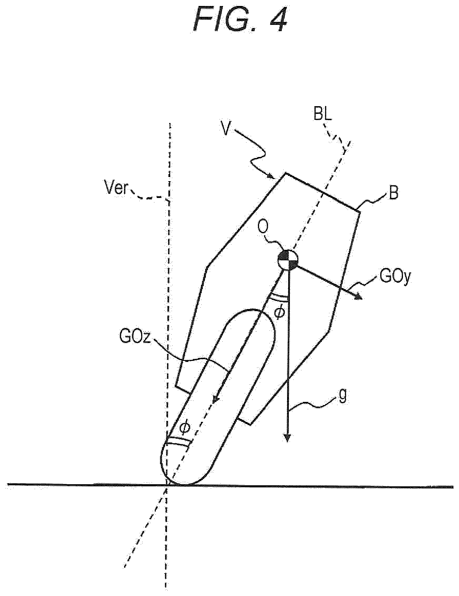

The bank angle detector 3 includes: a first bank angle calculation unit 31 that obtains a bank angle ϕG that is an inclination angle in the lateral direction of the body B based on the acceleration Gz, Gy; a second bank angle calculation unit 32 that obtains a bank angle ϕJ that is an inclination angle of the lateral direction of the body B based on the angular velocities Rθ, Rψ; and a bank angle selection unit 33 that selects a larger bank angle among the bank angle ϕG and the bank angle ϕJ as the bank angle ϕe of the body B. As illustrated in Fig. 4, the bank angle is an angle ϕ formed by a vertical direction axis BL of the body B with respect to a vertical axis Ver.

The first bank angle calculation unit 31 obtains the bank angle ϕG based on the acceleration Gz, Gy in the vertical direction and the lateral direction of the body B detected by the acceleration sensor 1. As illustrated in Fig. 4, when the body B banks by the bank angle ϕ with respect to the vertical axis Ver, if the centrifugal force is neglected, the resultant force of the acceleration GOz in the vertical direction and the acceleration GOy in the lateral direction of the body B acting on the center of gravity O of the body B coincides with the gravitational acceleration g. Therefore, the bank angle ϕ can be obtained by detecting the acceleration Gz, Gy.

The centrifugal force acting on the vehicle V increases as the speed Vv of the vehicle V increases during turning of the vehicle V, and the value of the acceleration Gy in the lateral direction detected by the acceleration sensor 1 tends to decrease. Therefore, as the speed Vv of the vehicle V increases during turning of the vehicle V, the bank angle ϕG obtained by the first bank angle calculation unit 31 tends to be smaller than the actual bank angle.

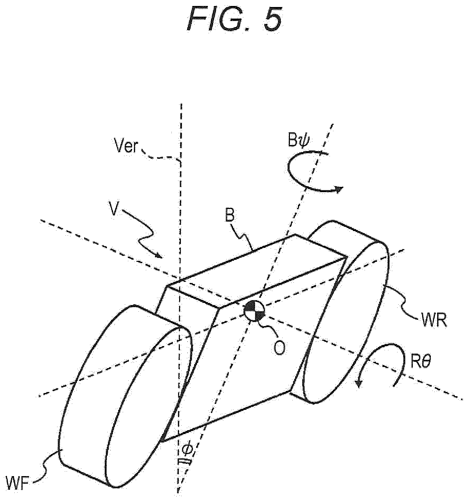

The second bank angle calculation unit 32 obtains the bank angle ϕJ based on the angular velocities Rθ, Rψ in the pitch direction and the yaw direction of the body B detected by the gyro sensor 2. As illustrated in Fig. 5, when the pitch angular velocity Rθ and the yaw angular velocity Rψ are obtained, the bank angle ϕ of the body B with respect to the vertical axis Ver is unambiguously determined. The second bank angle calculation unit 32 obtains the bank angle ϕJ from the pitch angular velocity Rθ and the yaw angular velocity Rψ instead of obtaining the bank angle by integrating the bank angular velocity. Thus, the second bank angle calculation unit 32 can obtain the bank angle ϕJ not including an error due to the integral drift with respect to the actual bank angle. Therefore, the second bank angle calculation unit 32 can obtain the bank angle ϕJ having a high degree of coincidence with the bank angle of the actual body B.

The bank angle selection unit 33 selects a larger one of the bank angle ϕG obtained by the first bank angle calculation unit 31 and the bank angle ϕJ obtained by the second bank angle calculation unit 32, to determine the one as the conclusive bank angle ϕe.

As described above, the first bank angle calculation unit 31 obtains the bank angle ϕG from the acceleration Gz, Gy detected by the acceleration sensor 1. However, when the speed Vv of the vehicle V increases, the bank angle ϕG obtained by the centrifugal force during the turning tends to be smaller than the actual bank angle of the body B. On the other hand, in a state where a large centrifugal force does not act on the body B, the degree of coincidence of the bank angle ϕG obtained by the first bank angle calculation unit 31 utilizing the output of the acceleration sensor 1 with respect to the actual bank angle is high. That is, the bank angle ϕG obtained based on the acceleration Gz, Gy in the vertical direction and the lateral direction of the body B has a high degree of coincidence with the bank angle of the body B of when the vehicle V is traveling at a low speed or stopped.

On the other hand, the second bank angle calculation unit 32 obtains the bank angle ϕJ based on the angular velocities Rθ, Rψ in the pitch direction and the yaw direction detected by the gyro sensor 2, so that the bank angle ϕJ with which the drift is small and with high coincidence with the actual bank angle can be obtained. On the other hand, the gyro sensor 2 has a characteristic of being difficult to accurately detect the pitch angular velocity Rθ and the yaw angular velocity Rψ with respect to the operation in which the body B slowly tilts. Under such circumstances, the bank angle ϕJ obtained by the second bank angle calculation unit 32 tends to be smaller than the actual bank angle.

Therefore, when a large angle among the bank angle ϕG obtained by the first bank angle calculation unit 31 and the bank angle ϕJ obtained by the second bank angle calculation unit 32 is selected as the bank angle ϕe, regardless of the situation of the vehicle V, the bank angle ϕe having a high degree of coincidence with the actual bank angle of the body B can be detected.

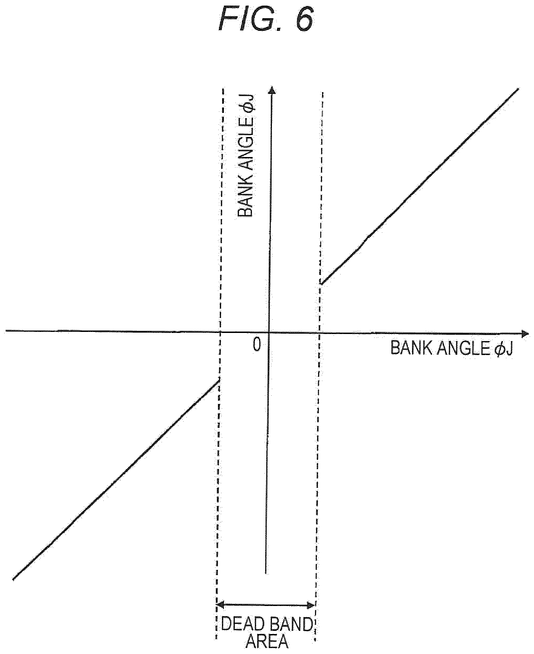

Since the gyro sensor 2 is equipped in the vehicle V and provided on the body B to which the engine vibration is transmitted, a component due to vibration is superimposed on the pitch angular velocity Rθ and the yaw angular velocity Rψ, so that an error tends to occur when the bank angle ϕJ has a value around 0 degree. Therefore, as illustrated in Fig. 6, it is preferable that a predetermined range including 0 degree with respect to the bank angle ϕJ obtained by the second bank angle calculation unit 32 is set as a dead band area, and the bank angle ϕJ with which the obtained bank angle ϕJ is within the dead band area is set to 0. Then, in the range in which an error is likely to occur in the bank angle ϕJ obtained from the output of the gyro sensor 2, the chance of selecting the bank angle ϕG obtained from the output of the acceleration sensor 1 increases, and the bank angle ϕe with a higher degree of coincidence with the actual bank angle of the body B can be detected. The range of the dead band area can be arbitrarily set. It is sufficient that the bank angle band in which the error easily occurs is set as the dead band area.

Further, as described above, when the speed Vv of the vehicle V is low, the bank angle ϕG obtained by the first bank angle calculation unit 31 has a high degree of coincidence with the actual bank angle of the body B. As described above, the bank angle ϕJ obtained by the second bank angle calculation unit 32 tends to be smaller than the actual bank angle, with respect to the operation in which the body B tilts slowly. Therefore, when a threshold Vα is provided for the speed Vv, and the speed Vv is equal to or less than the threshold Vα, the bank angle selection unit 33 may select without fail the bank angle ϕG obtained from the output of the acceleration sensor 1 by the first bank angle calculation unit 31. In this way, the bank angle ϕe with a higher degree of coincidence with the actual bank angle of the body B can be detected. In this case, a technique of setting a dead band area with respect to the bank angle ϕJ obtained by the second bank angle calculation unit 32 and setting the bank angle ϕJ with which the obtained bank angle ϕJ is within the dead band area, to 0, may be adopted at the same time.

In addition to the technique described above, the bank angle detector 3 may obtain the bank angle ϕe by using another technique such as obtaining the bank angle ϕe by integrating the roll angular velocity.

Subsequently, the control unit 4 obtains a damping force command value that is a command given to the actuator 27 of dampers DF, DR, based on the bank angle ϕe obtained as described above, and supplies a current to the actuator 27 as instructed by this damping force command value.

Specifically, as illustrated in Fig. 3, the control unit 4 is configured to include: a damping force command value calculation unit 41 that obtains a damping force command value FF of a front wheel side and a damping force command value FR of a rear wheel side, based on the bank angle ϕe; and a driver 42 that supplies a current to the actuators 27 of the dampers DF, DR in accordance with the amount of current instructed by the damping force command values FF, FR.

The damping force command value calculation unit 41 obtains the damping force command values FF, FR based on the bank angle ϕe. In this example, the damping force command value calculation unit 41 obtains the damping force command value FF, FR so that the extension side damping force of the dampers DF, DR increase in proportion to the bank angle ϕe. That is, when the bank angle ϕe increases beyond the predetermined angle threshold, the damping force command value calculation unit 41 sets the damping force adjustment valve 25 to the extension side hard mode, and obtains the damping force command value FF, FR instructing the valve opening degree of the damping force adjustment valve 25 according to the degree of the bank angle ϕe.

When the bank angle ϕe is equal to or smaller than the angle threshold, the damping force command value calculation unit 41 obtains the damping force command values FF, FR so that the damping force adjustment valve 25 of the dampers DF, DR is in the medium mode.

In this example, since the damping force adjustment valve 25 adjusts the opening degree even in the extension side hard mode, in order to increase the damping force of the dampers DF, DR in proportion to the bank angle ϕe, the damping force command value calculation unit 41 obtains the damping force command value FF, FR so that damping coefficients in the extension side of the dampers DF, DR increase. The damping force command value calculation unit 41 obtains the damping force command value FF, FR so that the opening degree of the damping force adjustment valve 25 becomes smaller as the bank angle ϕe becomes larger.

As described above, in this example, the damping force command value calculation unit 41 obtains the damping force command value FF, FR so that the extension side damping coefficients of the dampers DF, DR increase in proportion to the obtained bank angle ϕe. Instead of this, the damping force command value FF, FR may be obtained so that the damping coefficients of the dampers DF, DR incrementally increase in accordance with the bank angle ϕe. A map for obtaining the damping force command values FF, FR for determining the damping coefficient on the extension side of the damping force adjustment valve 25 in the extension side hard mode may be prepared with the bank angle ϕe as a parameter, so that the damping force command value calculation unit 41 performs a map operation from the bank angle ϕe to obtain the damping force command values FF, FR.

When the damping force adjustment valve 25 adjusts the valve opening pressure, the damping force command value calculation unit 41 may obtain the damping force command value FF, FR to increase the extension side damping force so that the valve opening pressure of the damping force adjustment valve 25 is larger as the bank angle ϕe is larger, when the dampers DF, DR are in the extension stroke. Since there is a limit in increasing of the damping force, the damping force command value FF, FR may be limited to the damping force command value that maximizes the damping force or the damping coefficients of the dampers DF, DR.

The driver 42 has a drive circuit for supplying a current to the actuator 27 and supplies a current to the actuator 27 according to an instruction by the damping force command value FF, FR obtained as described above. When the damping force adjustment valve 25 is a rotary valve enabling both selection of each position and adjustment of the valve opening degree described above, and the actuator 27 is a stepping motor, it is sufficient that the driver 42 supplies a current as described below. Specifically, for example, the driver 42 supplies a pulse current to the actuator 27 that is a stepping motor so that the damping force adjustment valve 25 is rotation driven so as to take a position in which a damping force instructed by the damping force command values FF, FR can be exerted. In this way, the driver 42 supplies the pulse current to the actuator 27, the position and the valve opening degree of the damping force adjustment valve 25 are adjusted according to the instruction of the damping force command value FF, FR as described above, and the damping force of the dampers DF, DR is controlled.

When the damping force adjustment valve 25 is a spool valve enabling both selection of each position described above and adjustment of the valve opening degree, and the actuator 27 is a solenoid, it is sufficient that the driver 42 supplies a current as described below. Specifically, for example, the driver 42 supplies a current of a current amount according to the damping force command value FF, FR to the actuator 27 that is a solenoid so that the damping force adjustment valve 25 is driven so as to take a position in which a damping force instructed by the damping force command values FF, FR can be exerted. It is sufficient that the driver 42 detects the current flowing through the actuator 27 and controls the current flowing through the actuator 27 by current feedback control. In this way, the driver 42 supplies a current to the actuator 27, the position and the valve opening degree of the damping force adjustment valve 25 are adjusted according to the instruction of the damping force command value FF, FR as described above, and the damping force of the dampers DF, DR is controlled.

A hardware resource in each part of the control device C described above, specifically, although not illustrated, for example, may be configured as a computer system including: an amplifier for amplifying the signals output by the acceleration sensor 1 and the gyro sensor 2; a converter that converts an analog signal into a digital signal; a storage device such as a central processing unit (CPU) or a read only memory (ROM); a random access memory (RAM); a crystal oscillator; and a bus line connecting these components. A control processing procedure for processing each signal to obtain the bank angle ϕe may be stored in advance in the ROM or another storage device, as a program.

Since the control device C is a well-known computer system, when the vehicle V includes an electronic control unit (ECU), the control device C can be integrated into the ECU.

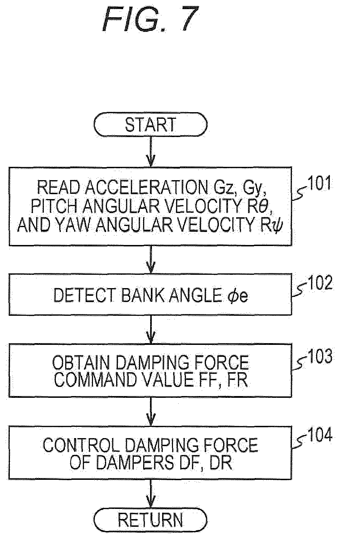

Here, a processing procedure in the damper control device C described above will be described with reference to a flowchart illustrated in Fig. 7.

First, the control device C reads the acceleration Gz, Gy, the pitch angular velocity Rθ, and the yaw angular velocity Rψ detected by the acceleration sensor 1 and the gyro sensor 2 (step 101). Subsequently, the control device C detects the bank angle ϕe from the acceleration Gz, Gy, the pitch angular velocity Rθ, and the yaw angular velocity Rψ (step 102).

The control device C obtains the damping force command values FF, FR from the bank angle ϕe (step 103). The control device C supplies a current from the driver 42 to the actuator 27 and drives the damping force adjustment valve 25 to control the damping force of the dampers DF, DR (step 104). The control device C repeatedly processes from steps 101 to 104 described above, and controls the damping force of the dampers DF, DR.

As described above, the control unit 4 executes the series of processes described above, thereby realizing the processes of each part of the bank angle detector 3 and the control unit 4. Each part described above is realized by reading the program described above and executing each calculation processing described above by the CPU.

The damper control device C and the suspension device S are configured as described above and control the damping force of the dampers DF, DR based on the bank angle ϕe. As described above, since the degree of the bank angle ϕe is a measure of the easiness of occurrence of the highside and the damping force of the dampers DF, DR is controlled based on the bank angle ϕe in the damper control device C and the suspension device S, the damping force of the dampers DF, DR can be appropriately controlled in accordance with a situation in which the highside is easy to occur. Therefore, in the damper control device C and the suspension device S of the present invention, the extension side damping force of the dampers DF, DR is properly controlled even in the condition where the highside is easy to occur, and the change in the load (the sum of the spring force of the suspension spring and the extension side damping force exhibited by the dampers DF, DR) exhibited by the suspension composed of the suspension spring and the dampers DF, DR decrease, and thereby, occurrence of the highside can be prevented.

In the damper control device C and the suspension device S of this example, the larger the bank angle ϕe is, the greater the extension side damping force of the dampers DF, DR is made. In other words, as the highside becomes easier to occur, the extension side damping force of the dampers DF, DR that exert an effect to prevent occurrence of the highside is increased, so that occurrence of the highside can be more effectively prevented.

In the damper control device C and the suspension device S of this example, when the bank angle ϕe is larger than the angle threshold, the extension side damping force of the dampers DF, DR is made larger. When the bank angle ϕe is small and there is no possibility of occurrence of the highside, the extension side damping force of the dampers DF, DR does not become large, so that the damping force does not become excessive and the riding comfort of the vehicle V and the acceleration performance are not deteriorated.

In the damper control device C and the suspension device S of this example, when the bank angle ϕe exceeds the angle threshold, the damping force in the compression side of the dampers DF, DR is made smaller. Specifically, in the extension side hard mode of the damping force adjustment valve 25, the damping force in the extension side is increased as hard and the damping force on the compression side is decreased as soft, and when the bank angle ϕe exceeds the angle threshold, the damping force on the compression side of the dampers DF, DR is reduced. In this way, in a situation where the highside occurs, the dampers DF, DR are difficult to extend and easy to compress, so that the load exerted by the entire suspension is less likely to be lost and the occurrence of the highside can be suppressed more. It is sufficient that the angle threshold is set to a value of the bank angle ϕe at which no highside occurs.

The control in the damper control device C may be used in combination with other control. For example, control may be performed by using this control together with posture control of the body B by skyhook control or the like, comparing the damping force command value by the posture control with the damping force command value by the control of the present invention, and adopting the damping force command value that increases the generation damping force of the dampers DF, DR.

When hydraulic fluid of the dampers DF, DR is electrorheological fluid or magnetorheological fluid, instead of providing the damping force adjustment valve 25 in the bypass passage 24, an electrode or coil for applying an electric or magnetic field may be provided so that the damping force adjustment can be performed. In this case, the bypass passage 24 may also be eliminated, and instead of the damping valve 23, an electrode or a coil may be provided in a passage communicating the extension side chamber R1 and the compression side chamber R2.

Although the preferred embodiments of the present invention have been described in detail, modifications, variations and changes can be made without departing from the scope of the claims.

## Claims

1. A damper control device (C), comprising:
a bank angle detector (3) that detects a bank angle being an inclination angle in a lateral direction of a body (B) of a straddle-type vehicle (V); and
a control unit (4) that sets a damping force in an extension side of a damper (DF, DR) interposed between the body (B) and a wheel (WF, WR) of the straddle-type vehicle (V), to be larger as the bank angle is larger,
**characterized in that** said control unit (4) sets the damping force in a compression side of the damper (DF, DR) to be smaller when the bank angle exceeds an angle threshold.

2. The damper control device (C) according to claim 1, wherein
the control unit (4) sets the damping force in an extension side of the damper (DF, DR) to be larger when the bank angle exceeds an angle threshold.

3. A suspension device (S) comprising:
a damper (DF, DR) that can adjust damping force and is interposed between the body (B) and the wheel (WF, WR) of the straddle-type vehicle (V); and
the damper control device (C) according to any of claims 1 to 2.

4. The suspension device (S) according to claim 3, wherein
the damper (DF, DR) has a damping force adjustment valve (25) having an extension side hard mode in which a damping characteristic in an extension side is made hard and a damping characteristic in a compression side is made soft.

## Patentansprüche

1. Dämpfersteuereinrichtung (C), umfassend:
einen Bankwinkeldetektor (3), der einen Bankwinkel detektiert, wobei der Bankwinkel ein Neigungswinkel in einer lateralen Richtung eines Körpers (B) eines Straddle-Typ-Fahrzeugs (V) ist; und
eine Steuereinheit (4), die eine Dämpfungskraft auf einer Ausdehnungsseite eines Dämpfers (DF, DR) so setzt, dass sie größer ist als der Bankwinkel größer wird, wobei der Dämpfer (DF, DR) zwischen dem Körper (B) und einem Rad (WF, WR) des Straddle-Typ-Fahrzeugs (V) eingefügt ist,
**dadurch gekennzeichnet, dass** die Steuereinheit (4) die Dämpfungskraft auf einer Kompressionsseite des Dämpfers (DF, DR) kleiner setzt, wenn der Bankwinkel einen Winkelgrenzwert überschreitet.

2. Dämpfersteuereinrichtung (C) nach Anspruch 1, wobei
die Steuereinheit (4) die Dämpfungskraft auf einer Ausdehnungsseite des Dämpfers (DF, DR) größer setzt, wenn der Bankwinkel einen Winkelgrenzwert überschreitet.

3. Aufhängungseinrichtung (S), umfassend:
einen Dämpfer (DF, DR), der Dämpfungskraft anpassen kann und zwischen dem Körper (B) und dem Rad (WF, WR) des Straddle-Typ-Fahrzeugs eingefügt ist; und
die Dämpfersteuereinrichtung (C) nach einem der Ansprüche 1 bis 2.

4. Aufhängungseinrichtung (S) nach Anspruch 3, wobei
der Dämpfer (DF, DR) ein Dämpfungskraft-Anpassungsventil (25) hat, das einen Ausdehnungsseiten-Hart-Modus hat, in dem eine Dämpfungseigenschaft auf einer Ausdehnungsseite hart gemacht wird und eine Dämpfungseigenschaft in einer Kompressionsseite weich gemacht wird.

## Revendications

1. Dispositif de commande d'amortisseur (C),
comprenant :
un détecteur d'angle de roulis (3) qui détecte un angle de roulis qui est un angle d'inclinaison dans une direction latérale d'une carrosserie (B) d'un véhicule de type monté à califourchon (V); et
une unité de commande (4) qui règle une force d'amortissement d'un côté d'extension d'un amortisseur (DF, DR) placé entre la carrosserie (B) et une roue (WF, WR) du véhicule de type monté à califourchon (V) de manière à ce qu'elle augmente avec l'angle de roulis,
**caractérisé en ce que** ladite unité de commande (4) règle la force d'amortissement d'un côté de compression de l'amortisseur (DF, DR) de manière à être plus petite lorsque l'angle de roulis dépasse un seuil d'angle.

2. Dispositif de commande d'amortisseur (C) selon la revendication 1, dans lequel
l'unité de commande (4) règle la force d'amortissement d'un côté d'extension de l'amortisseur (DF, DR) de manière à être plus grande lorsque l'angle de roulis dépasse un seuil d'angle.

3. Dispositif de suspension (S) comprenant :
un amortisseur (DF, DR) qui peut régler la force d'amortissement et qui est placé entre la carrosserie (B) et la roue (WF, WR) du véhicule de type monté à califourchon (V); et
le dispositif de commande d'amortisseur (C) selon l'une quelconque des revendications 1 à 2.

4. Dispositif de suspension (S) selon la revendication 3, dans lequel
l'amortisseur (DF, DR) a une soupape de réglage de la force d'amortissement (25) ayant un mode dur côté extension dans lequel une caractéristique d'amortissement d'un côté d'extension est rendue dure et une caractéristique d'amortissement d'un côté compression est rendue souple.
